# EUROPEAN PATENT APPLICATION

(11) **EP 2 160 000 A1**
(43) Date of publication of application: **03.03.2010**
(21) Application number: 09010671.7
(22) Date of filing: 19.08.2009
(51) Int. Cl.: H04M 1/60, H04R 29/00

(54) **Method and system for processing audio signals via separate input and output processing paths**

(30) Priority: 26.08.2008 US 91840 P; 09.10.2008 US 248426
(71) Applicant: Broadcom Corporation, Irvine, CA 92617 (US)
(72) Inventor: Kong, Hongwei, 07834 Denville, NJ (US); Sollenberger, Nelson, 07727 Farmingdal, NJ (US); Cheng, Taiyi, 95131 San Jose, CA (US); Hahm, Mark, 53029 Hartland, WI (US); Brooks, Todd, 92651 Laguna Beach, CA (US); Jiang, Xicheng, 92612 Irvine, CA (US)
(74) Representative: Jehle, Volker Armin

(57) **Abstract**

Aspects of a method and system for processing audio signals via separate input and output processing paths are provided. In this regard, a hardware audio CODEC comprising one or more audio inputs and one or more audio outputs and may be enabled to route, via one or more switching elements, audio signals from any of the inputs to any of the outputs. The CODEC may be enabled to simultaneously process a plurality of audio signals based on a configuration of the switching elements. Upstream from the switching elements, received audio signals may be processed independent of an output to which the may be communicated. Downstream from said switching elements audio signals may be processed independent of an input via which the signals were received.

## Description

### CROSS-REFERENCE TO RELATED APPLICATIONS/INCORPORATION BY REFERENCE

This application makes reference to, claims priority to and claims benefit from United States Provisional Application Serial No. 61/091,840 filed on August 26, 2008.

### FIELD OF THE INVENTION

Certain embodiments of the invention relate to processing audio signals. More specifically, certain embodiments of the invention relate to a method and system for processing audio signals via separate input and output processing paths.

### BACKGROUND OF THE INVENTION

In audio applications, systems that provide audio interface and processing capabilities may be required to support duplex operations, which may comprise the ability to collect audio information through a sensor, microphone, or other type of input device while at the same time being able to drive a speaker, earpiece of other type of output device with processed audio signal. In order to carry out these operations, these systems may comprise audio processing devices that provide appropriate gain, filtering, analog-to-digital conversion, and/or other processing of audio signals in an uplink direction and/or a downlink direction. In the downlink direction, an audio processing device may condition and/or process baseband audio signals from a receiver for presentation via audio output devices such as a loudspeaker and headphones. In an uplink direction, an audio processing device may process and/or condition audio signals received from an input device such as a microphone and convey the processed signals to a transmitter.

Limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for processing audio signals via separate input and output processing paths, substantially as shown in and/or described in connection with at least one of the figures, as set forth more completely in the claims.
According to an aspect, a method for signal processing comprises:
in a hardware audio CODEC comprising a plurality of inputs and a plurality of outputs, switching, via one or more switching elements, any of said plurality of inputs to any of said plurality of outputs to enable said hardware audio CODEC to process any of a plurality of received audio signals received via said plurality of inputs.
Advantageously, the method further comprises simultaneously processing by said hardware audio CODEC, two or more of said plurality of received audio signals based on said switching.
Advantageously, the method further comprises dynamically switching any of said plurality of inputs to any of said plurality of outputs.
Advantageously, the method further comprises, upstream from said one or more switching elements, conditioning said any of a plurality of received audio signals independent of an output to which a corresponding processed output audio signal is it to be communicated.
Advantageously, the method further comprises, downstream from said one or more switching elements, conditioning an audio signal independent of an input via which a corresponding one of said any of a plurality of received audio signals was received.
Advantageously, the method further comprises processing said any of a plurality of received audio signals in said hardware audio CODEC based on whether said audio signals comprise stereo or monaural audio data.
Advantageously, the method further comprises processing said any of a plurality of received audio signals in said hardware audio CODEC based on whether said audio signals comprise voice, music, or ringtone data.
Advantageously, the method further comprises processing said any of a plurality of received audio signals in said hardware audio CODEC based on a source of said audio signals.
Advantageously, said source of said signals comprise one or more of an analog microphone, a digital microphone, and a receiver enabled to receive signals adhering to one or more wireless protocols.
Advantageously, the method further comprises processing said any of a plurality of received audio signals in said hardware audio CODEC based on one or more output devices to which said audio signals are to be output.
Advantageously, said output devices comprise one or more of a speaker, a headphone, an earphone, and a hearing aid compatibility device.
Advantageously, the method further comprises processing said any of a plurality of received audio signals based on one or more uplink paths via which said audio signals are to be transmitted to a remote wireless device.
According to an aspect, a system for signal processing comprises:
   one or more circuits comprising a hardware audio CODEC with a plurality of inputs, a plurality of outputs, and one or more switching elements, said one or more circuits being operable to switch any of said plurality of inputs to any of said plurality of outputs to enable said hardware audio CODEC to process any of a plurality of received audio signals received via said plurality of inputs.
Advantageously, said one or more circuits are operable to simultaneously process two or more of said plurality of received audio signals based on said switching.
Advantageously, said one or more circuits are operable to dynamically switch any of said plurality of inputs to any of said plurality of outputs.
Advantageously, said one or more circuits are operable to, upstream from said one or more switching elements, condition said any of a plurality of received audio signals independent of an output to which a corresponding processed output audio signal is it to be communicated.
Advantageously, said one or more circuits are operable to, downstream from said one or more switching elements, condition an audio signal independent of an input via which a corresponding one of said any of a plurality of received audio signals was received.
Advantageously, said one or more circuits are operable to process said any of a plurality of received audio signals in said hardware audio CODEC based on whether said audio signals comprise stereo or monaural audio data.
Advantageously, said one or more circuits are operable to process said any of a plurality of received audio signals in said hardware audio CODEC based on whether said audio signals comprise voice, music, or ringtone data.
Advantageously, said one or more circuits are operable to process said any of a plurality of received audio signals in said hardware audio CODEC based on a source of said audio signals.
Advantageously, said source of said signals comprise one or more of an analog microphone, a digital microphone, and a receiver enabled to receive signals adhering to one or more wireless protocols.
Advantageously, said one or more circuits are operable to process said any of a plurality of received audio signals in said hardware audio CODEC based on one or more output devices to which said audio signals are to be output.
Advantageously, said output devices comprise one or more of a speaker, a headphone, an earphone, and a hearing aid compatibility device.
Advantageously, said one or more circuits are operable to process said any of a plurality of received audio signals based on one or more uplink paths via which said audio signals are to be transmitted to a remote wireless device.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an exemplary wireless system, which may be utilized in accordance with an embodiment of the invention.

FIG. 2A is a block diagram illustrating an exemplary audio processing device, in accordance with an embodiment of the invention.

FIG. 2B is a block diagram illustrating details of exemplary digital processing and analog processing portions of an audio processing device, in accordance with an embodiment of the invention.

FIG. 3 is a block diagram illustrating selecting audio signals for processing by an audio processing device, in accordance with an embodiment of the invention.

FIG. 4A is block diagram illustrating a high(er) bandwidth input audio processing block of an audio processing device, in accordance with an embodiment of the invention.

FIG. 4B is block diagram illustrating a low(er) bandwidth input audio processing block of an audio processing device, in accordance with an embodiment of the invention.

FIG. 4C is block diagram illustrating a digital vibration processing block of an audio processing device, in accordance with an embodiment of the invention.

FIG. 5 is a block diagram illustrating routing of audio signals from an input processing path of an audio processing device to an output processing path, in accordance with an embodiment of the invention.

FIG. 6 is a block diagram illustrating processing of audio signals for conveyance to an audio output device and/or a feedback audio processing block, in accordance with an embodiment of the invention.

FIG. 7A is block diagram illustrating a high(er) bandwidth feedback audio processing block of an audio processing device, in accordance with an embodiment of the invention.

FIG. 7B is block diagram illustrating a low(er) bandwidth feedback audio processing block of an audio processing device, in accordance with an embodiment of the invention.

FIG. 8A is a block diagram illustrating an analog audio processing block of an audio processing device, in accordance with an embodiment of the invention.

FIG. 8B is a block diagram illustrating an analog vibration processing block of an audio processing device, in accordance with an embodiment of the invention.

FIG. 9 is a flowchart illustrating exemplary steps for processing of signals by a hardware audio CODEC, in accordance with an embodiment of the invention.

### DETAILED DESCRIPTION OF THE INVENTION

Certain aspects of the invention may be found in a method and system for processing audio signals via separate input and output processing paths. In various embodiments of the invention, a hardware audio CODEC comprising one or more audio inputs and one or more audio outputs and may be enabled to route, via one or more switching elements, audio signals from any of the inputs to any of the outputs. The CODEC may be enabled to simultaneously process a plurality of audio signals based on a configuration of the switching elements. The switching elements may be dynamically configured. Upstream from the switching elements, received audio signals may be processed independent of an output to which the may be communicated. Downstream from the switching elements audio signals may be processed independent of an input via which the signals were received. Audio signals may be processed based on whether the audio signals comprise stereo or monaural audio data; whether the audio signals comprise voice, music, or ringtone data; a source of the audio signals; one or more output devices to which the audio signals are to be output; and one or more uplink paths via which the audio signals are to be transmitted to a remote device or far end communication partner. Exemplary audio signal sources may comprise an analog microphone, a digital microphone, and a receiver enabled to receive signals adhering to one or more wireless protocols. Exemplary output devices may comprise a speaker, a headphone, an earphone, and a hearing aid compatibility device.

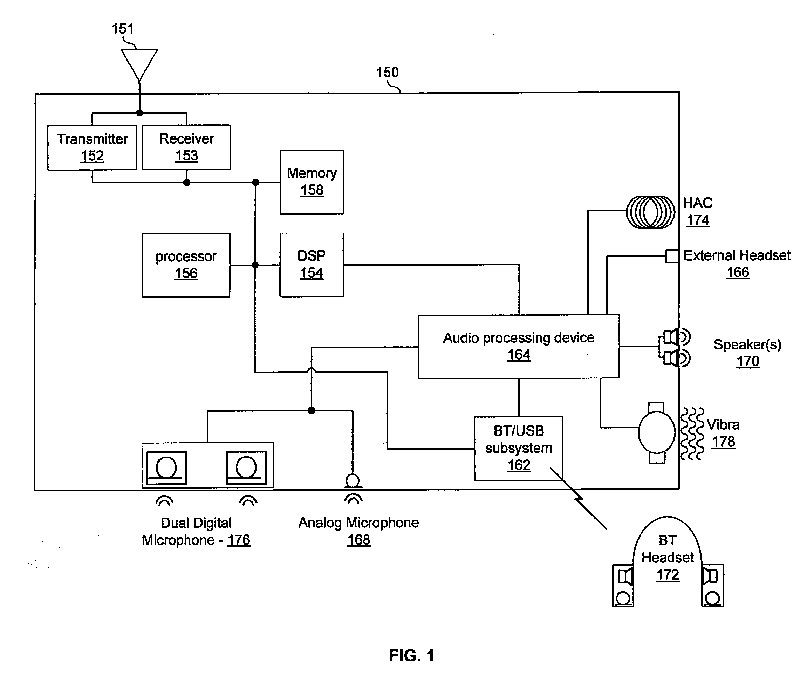

FIG. 1 is a block diagram of an exemplary wireless system, which may be utilized in accordance with an embodiment of the invention. Referring to FIG. 1, the wireless system 150 may comprise an antenna 151, a transmitter 152, a receiver 153, a digital signal processor 154, a processor 156, a memory 158, a Bluetooth (BT) subsystem 162, an audio processing device 164, an external headset port 166, an analog microphone 168, speaker(s) 170, a Bluetooth headset 172, a hearing aid compatibility (HAC) coil 174, a dual digital microphone 176, and a vibration transducer 178. The antenna 151 may be used for reception and/or transmission of RF signals. Different wireless systems may use different antennas for transmission and reception.

The transmitter 152 may comprise suitable logic, circuitry, and/or code operable to modulate and up-convert baseband signals to RF signals for transmission by one or more antennas, which may be represented generically by the antenna 151. The transmitter 152 may be operable to execute other functions, for example, filtering the baseband and/or RF signals, and/or amplifying the baseband and/or RF signals. Although a single transmitter 152 is shown, the invention is not so limited. Accordingly, there may be a plurality of transmitters and/or receivers. In this regard, the plurality of transmitters may enable the wireless system 150 to handle a plurality of wireless protocols and/or standards including cellular, wireless local area networking (WLAN), and personal area networking (PAN). In addition, the transmitter 152 may be combined with the receiver 153 and implemented as a combined transmitter and receiver (transceiver).

The receiver 153 may comprise suitable logic, circuitry, and/or code operable to down-convert and demodulate received RF signals to baseband signals. The RF signals may be received by one or more antennas, which may be represented generically by the antenna 151. The receiver 153 may be operable to execute other functions, for example, filtering the baseband and/or RF signals, and/or amplifying the baseband and/or RF signals. Although a single receiver 153 is shown, the invention is not so limited. Accordingly, there may be a plurality of receivers. In this regard, the plurality of receivers may enable the wireless system 150 to handle a plurality of wireless protocols and/or standards including cellular, WLAN, and PAN. In addition, the receiver 153 may be implemented as a combined transmitter and a separate receiver.

The DSP 154 may comprise suitable logic, circuitry, and/or code operable to process audio signals. In various embodiments of the invention, the DSP 154 may encode, decode, modulate, demodulate, encrypt, and/or decrypt audio signals. In this regard, the DSP 154 may be operable to perform computationally intensive processing of audio signals.

The processor 156 may comprise suitable logic, circuitry, and/or code operable to configure and/or control one or more portions of the system 150, control data transfers between portions of the system 150, and/or otherwise process data. Control and/or data information may be transferred between the processor 156 and one or more of the transmitter 152, the receiver 153, the DSP 154, the memory 158, the audio processing device 164, and the BT and/or USB subsystem 162. The processor 156 may be utilized to update and/or modify programmable parameters and/or values in one or more of the transmitter 152, the receiver 153, the DSP 154, the memory 158, the audio processing device 164, and the BT and/or USB subsystem 162. In this regard, a portion of the programmable parameters may be stored in the system memory 158. The processor 156 may be any suitable processor or controller. For example, the processor 156 may be a reduced instruction set computing (RISC) microprocessor such as an advanced RISC machine (ARM), advanced virtual RISC (AVR), microprocessor without interlocked pipeline stages (MIPS), or programmable intelligent controller (PIC).

The system memory 158 may comprise suitable logic, circuitry, and/or code operable to store a plurality of control and/or data information, including parameters needed to configure one or more of the transmitter 152, the receiver 153, the DSP 154, and/or the audio processing device 164. The system memory 158 may store at least a portion of the programmable parameters that may be manipulated by the processor 156.

In an exemplary embodiment of the invention, the DSP 154 and processor 156 may exchange audio data and control information via the memory 158. For example, the processor 156 may write encoded audio data, such as MP3 or AAC audio, to the memory 158 and the memory may pass the encoded audio data to the DSP 154. Accordingly, the DSP 154 may decode the data and write pulse-code modulated (PCM) audio back into the shared memory for the processor 156 to access and/or to be delivered to the audio processing device 164.

The BT and/or USB subsystem 162 may comprise suitable circuitry, logic, and/or code operable to transmit and receive Bluetooth and/or Universal Serial Bus (USB) signals. The BT and/or USB subsystem 162 may be operable to up-convert, down-convert, modulate, demodulate, and/or otherwise process BT and/or USB signals. In this regard, the BT and/or USB subsystem 162 may handle reception and/or transmission of BT and/or USB signals via a wireless communication medium and/or handle reception and/or transmission of USB signals via a wireline communication medium. Information and/or data received via a BT and/or USB connection may be communicated between the BT and/or USB subsystem 162 and one or more of the transmitter 152, the receiver 153, the DSP 154, the processor 156, the memory 158, and the audio processing device 164. For example, the BT and/or USB subsystem 162 may extract audio from a received BT and/or USB signal and may convey the audio to other portions of the wireless system 150 via an inter-IC sound (I²S) bus. Information and/or data may be communicated from one or more of the transmitter 152, the receiver 153, the DSP 154, the processor 156, the memory 158, and the audio processing device 164 to the BT and/or USB subsystem 162 for transmission over a BT and/or USB connection. For example, audio signals may be received from other portions of the wireless system 150 via an I²C bus and the audio signal may be transmitted via a BT and/or USB connection. Additionally, control and/or feedback information may be communicated between the BT and/or USB subsystem 162 and one or more of the transmitter 152, the receiver 152, the DSP 154, the processor 156, the memory 158, and the audio processing device 164.

The audio processing device 164 may comprise suitable circuitry, logic, and/or code that may be operable to process audio signals received from and/or communicated to input and/or output devices. The input devices may be within or communicatively coupled to the wireless device 150, and may comprise, for example, the analog microphone 168, the stereo speakers 170, the Bluetooth headset 172, the hearing aid compatible (HAC) coil 174, the dual digital microphone 176, and the vibration transducer 178. The audio processing device 164 may up-sample and/or down-sample audio signals to one or more desired sample rates for communication to an audio output device, the DSP 154, and/or the BT and/or USB subsystem 162. In this regard, the audio processing device 164 may also be enabled to handle a plurality of data sampling rate inputs. For example, the audio processing device 164 may accept digital audio signals at sampling rates such as 8 kHz, 11.025 kHz, 12 kHz, 16 kHz, 22.05 kHz, 24 kHz, 32 kHz, 44.1 kHz, and/or 48 kHz. The audio processing device 164 may be enabled to handle a plurality of digital audio inputs of various resolutions, such as 16 or 18-bit resolution, for example. The audio processing device 164 may support mixing of a plurality of audio sources. For example, the audio processing device 164 may support audio sources such as general audio, polyphonic ringer, I²S FM audio, vibration driving signals, and voice. In an exemplary embodiment of the invention, the general audio and polyphonic ringer sources may support the plurality of sampling rates that the audio processing device 164 may be enabled to accept, while the voice source may support a portion of the plurality of sampling rates, such as 8 kHz and 16 kHz.

The audio processing device 164 may utilize a programmable infinite impulse response (IIR) filter and/or a programmable finite impulse response (FIR) filter for at least a portion of the audio sources to compensate for passband amplitude and phase fluctuation for different input and/or output devices. In this regard, filter coefficients may be configured or programmed dynamically based on operations. Moreover, filter coefficients may all be switched in one-shot or may be switched sequentially, for example. The audio processing device 164 may also utilize a modulator, such as a Delta-Sigma (ΔΣ) modulator, for example, to code digital output signals for analog processing. The audio processing device 164 may be referred to, for example, as an audio coding and/or decoding device or CODEC. In various embodiments of the invention, the audio processing device 164 may be implemented in dedicated hardware.

The external headset port 166 may comprise a physical connection for an external headset to be communicatively coupled to the wireless system 150. The headset may, for example, be an analog headset comprising a microphone and a pair of stereo transducers. Alternatively, the headset may be a digital headset which may utilize a protocol such as USB for communicating audio information.

The analog microphone 168 may comprise suitable circuitry, logic, and/or code operable to detect sound waves and convert them to electrical signals via a piezoelectric effect, for example. The electrical signals generated by the analog microphone 168 may comprise analog signals that may require analog to digital conversion before processing.

The speaker(s) 170 may comprise one or more speakers operable to generate acoustic waves from electrical signals received from the audio processing device 164. In an exemplary embodiment of the invention, there may be a pair of speakers which may be operable to output acoustic waves corresponding to, for example, left and right stereo channels.

The Bluetooth headset 172 may comprise a wireless headset that may be communicatively coupled to the wireless system 150 via the BT and/or USB subsystem 162. In this manner, the wireless system 150 may be operated in a hands-free mode, for example.

The HAC coil 174 may comprise suitable circuitry, logic, and/or code that may enable communication between the wireless device 150 and a hearing aid, for example. In this regard, audio signals may be magnetically coupled from the HAC coil 174 to a coil in a user's hearing aid.

The dual digital microphone 176 may comprise suitable circuitry, logic, and/or code operable to detect sound waves and convert them to electrical signals. The electrical signals generated by the dual digital microphone 176 may comprise digital signals, and thus may not require analog to digital conversion prior to digital processing in the audio processing device 164.

The vibration transducer 178 may comprise suitable circuitry, logic, and/or code operable to notify a user of an incoming call, alerts and/or message to the wireless device 150 without the use of sound. The vibration transducer may generate vibrations that may be in synch with, for example, audio signals such as speech or music.

In operation, audio signals from the receiver 153, the processor 156, and/or the memory 158 may be conveyed to the DSP 154. The DSP 154 may process the signals to generate output baseband audio signals to the audio processing device 164. Additionally, baseband audio signals may be conveyed from the BT and/or USB subsystem 162, the analog microphone 168, and/or the digital microphone 176, to the audio processing device 164.

The audio processing device 164 may process and/or condition one or more of the baseband audio signals to make them suitable for conveyance to one or more of the speaker(s) 170, the headset 166, the HAC 174, the vibration transducer 178, the transmitter 152, and/or the BT and/or USB subsystem 162. In this regard, the audio processing device 164 may provide flexibility in terms of which input signals are conveyed to which audio output devices and/or uplink paths.

Processing of audio signals by the audio processing device 164 may be described in terms of input processing paths and output processing paths. Processing and/or conditioning of each audio signal in an input processing path may depend on the source and/or input device from which the audio signals was received but may be independent of an output processing path to which the audio signal may be conveyed. Processing and/or conditioning of an audio signal in an output processing path may depend on the output device and/or uplink path to which the audio signal may be conveyed, but may be independent of the source and/or input device from which the audio signal was received. Thus, the input processing paths of the audio processing device 164 may be separate from the output processing paths of the audio processing device 164.

Accordingly, the type and number of input signals may be variable, the type and number of output signals may be variable. Moreover, the type and number of input signals routed to an output device may be variable. In this regard, each input signal may be processed and/or conditioned for output via one or more output devices such as the external headset port 166, the speaker(s) 170, the Bluetooth headset 172, the hearing aid compatibility (HAC) coil 174, a dual digital microphone 176, the vibration transducer 178. Additionally, one or more signals input to the audio processing device 164 may be processed and/or conditioned for output to an uplink path for transmission to a remote wireless device utilizing protocols such as BT, USB, cellular, and/or WLAN protocols.

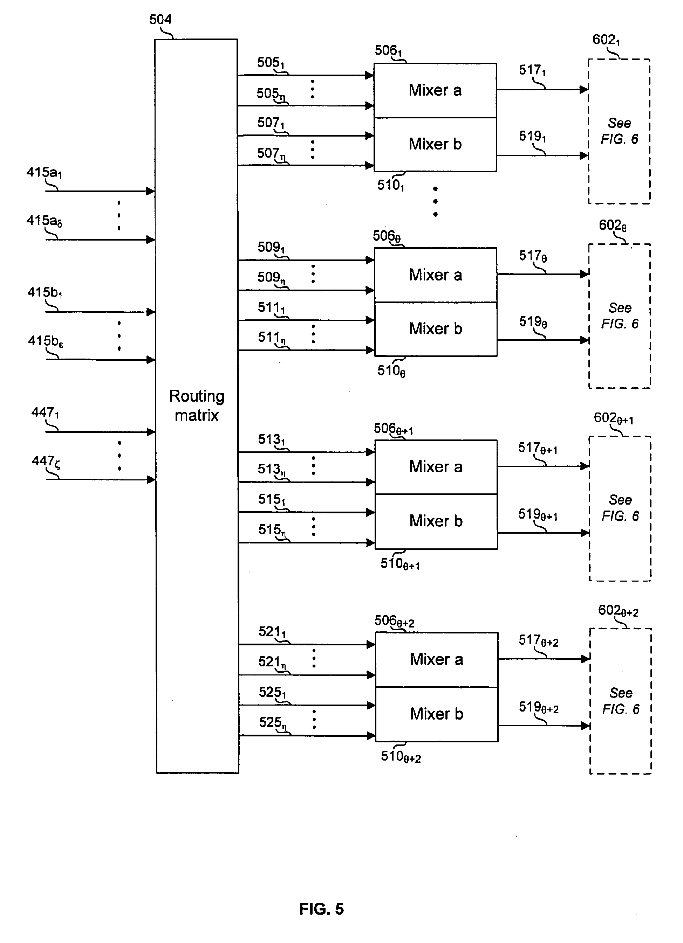

In an exemplary embodiment of the invention, the input processing paths and output processing paths may be separated by a routing matrix 504 (FIG. 5). However, the input processing paths and the output processing paths described herein are for illustration purposes to clarify description of various aspects of the present invention. Accordingly, the input processing paths and/or output processing paths may not be distinctly defined and/or delineated in hardware and/or software. Thus, various portions of the input processing path and/or the output processing path may be performed in any portion of the audio processing device 164. Other similar paths may also be provided without departing from the various embodiments of the invention.

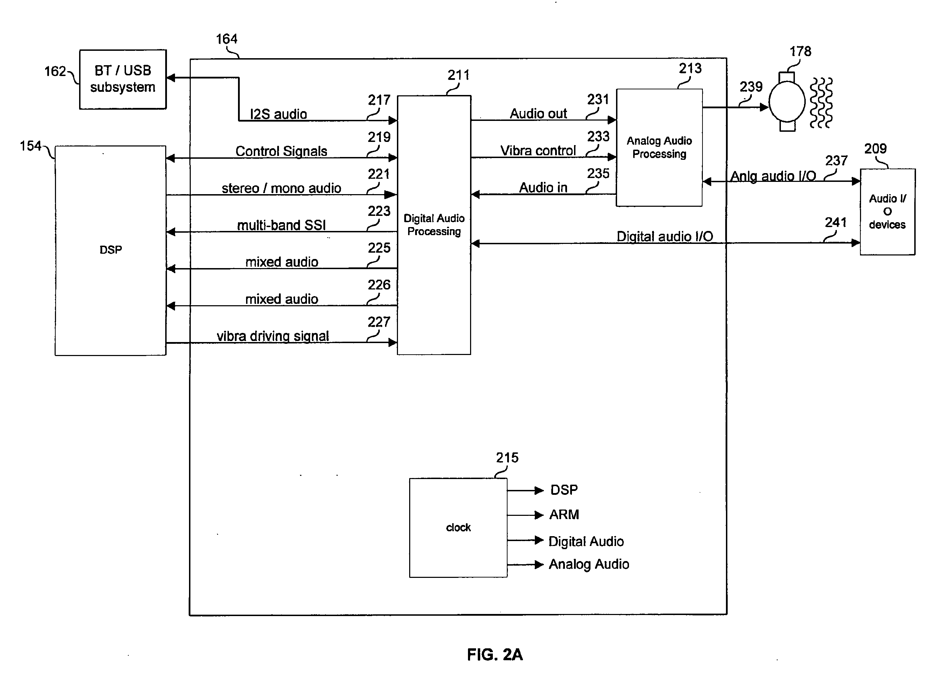

FIG. 2A is a block diagram illustrating an exemplary audio processing device, in accordance with an embodiment of the invention. Referring to FIG. 2A, there is shown the DSP 154, the BT and/or USB subsystem 162, the audio processing device 164, and audio input and/or output devices 209. The audio input and/or output devices 209 may comprise one or more devices such as the external headset port 166, the analog microphone 168, the speaker(s) 170, the Bluetooth headset 172, the hearing aid compatibility (HAC) coil 174, the dual digital microphone 176, and the vibration transducer 178 described with respect to FIG. 1. The DSP 154 and the BT and/or USB subsystem 162 may be as described with respect to FIG. 1. The audio processing device 164 may be as described with respect to FIG. 1 and may comprise a digital portion 211, an analog portion 213, and a clock 215.

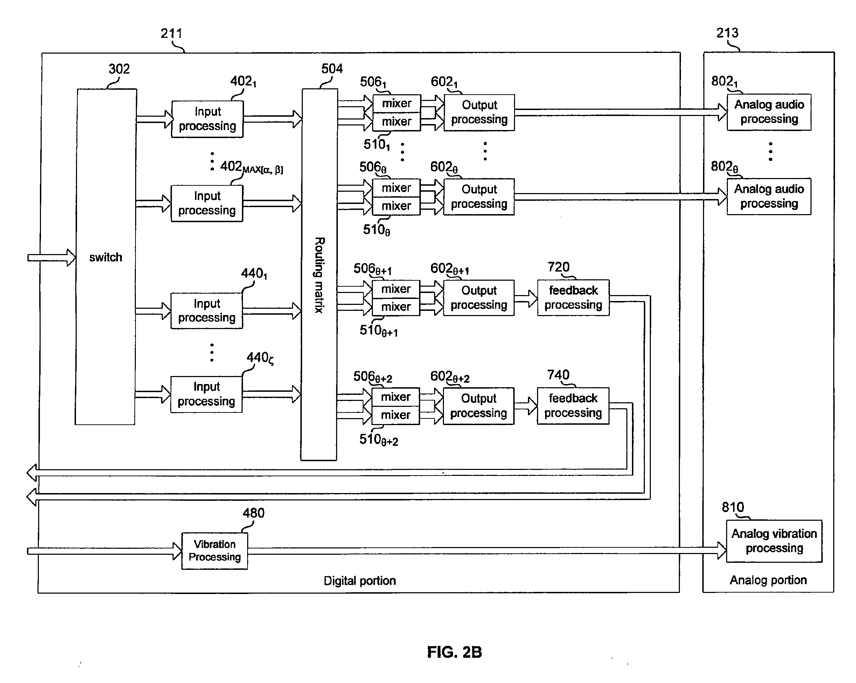

The digital portion 211 may comprise suitable logic, circuitry, and/or code operable to process audio signals in the digital domain. In this regard, the digital portion 211 may be operable to filter, buffer, up-sample, down-sample, apply a digital gain or attenuation to, route, and/or otherwise condition digital audio signals. Additional details of the digital portion 211 are described below with respect to, for example, FIGS. 2B, 3, 4A, 4B, 4C, 5, 6, 7A, and 7B.

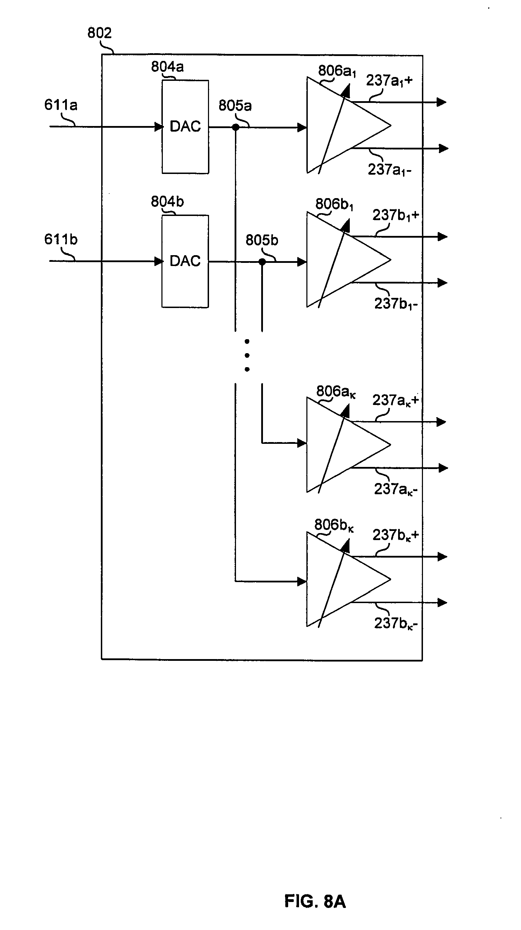

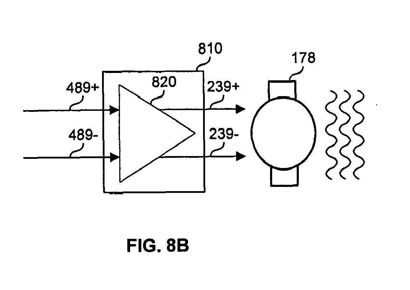

The analog portion 213 may comprise suitable logic, circuitry, and/or code operable to convert digital audio signals to an analog representation and amplifying and/or buffering the analog signals for driving audio output devices. Additional details of the analog portion 213 are described below with respect to, for example, FIGS. 2B, 8A, and 8B.

The clock 215 may comprise suitable logic, circuitry, and/or code operable to generate one or more periodic signals. The clock 215 may, for example, comprise one or more crystal oscillators, phase locked loops (PLLs), and/or direct digital frequency synthesizers (DDFS). The clock 215 may output a plurality of signals each with a distinct frequency and/or phase. The signals output by the clock 215 may be conveyed to one or more of the digital portion 211, the analog portion 213, the DSP 154, the memory 158, and/or the processor 156.

In various exemplary embodiments of the invention, one or more audio signal(s) 217 may be communicated between the digital portion 211 and the BT and/or USB subsystem 162 via an inter-IC (I²S) bus. Each of the audio signal(s) 217 may be a monaural channel, a left stereo channel, or a right stereo channel. In an exemplary embodiment of the invention, the BT and/or USB subsystem 162 may be enabled to receive FM broadcast radio and thus two signals 217 comprising left and right channels of FM radio data may be conveyed to the digital portion 211 via an I²S bus.

In various exemplary embodiments of the invention, output audio signal(s) 231, vibration control 233, and input audio signal(s) 235 may be communicated between the digital portion 211 and the analog portion 213.

The output audio signal(s) 231 may comprise one or more digital audio signals which have been suitably processed and/or conditioned by the digital portion 211 for output via one or more of the audio output devices 209. Each of the audio signal(s) 231 may be a monaural channel, a left stereo channel, or a right stereo channel. Each of the output audio signal(s) 231 may be converted to an analog representation and amplified by the analog portion 213.

The input audio signal(s) 235 and 241 from an audio input device 209 may comprise one or more digital audio signals to be processed by the digital portion 211. The input audio signal(s) 235 and/or 241 may comprise monaural and/or stereo audio data which the digital portion 211 may process for conveyance to the DSP 154 and subsequent transmission to a remote wireless device. The input audio signal(s) 235 and/or 241 may comprise monaural and/or stereo audio data which the digital portion 211 may process in a "loopback" path for conveyance to one or more audio output devices 209.

The vibration control signal 233 may be a pulse width modulated square wave that may, after being amplified by an analog vibration processing block 810 (FIG. 2B), control vibration of the vibration transducer 178. In various exemplary embodiments of the invention, spectral shaping techniques may be applied in the pulse width modulation function to reduce noise in the audible band.

In various exemplary embodiments of the invention, one or more control signals 219, one or more audio signals 221, one or more SSI signals 223, one or more mixed audio signals 225 and/or 226, and one or more signals 227 for driving a vibration transducer may be communicated between the DSP 154 and the digital portion 211. Monaural and/or stereo audio data may be extracted from RF signals received by the receiver 153 and processed by the DSP block 154 before being conveyed to the digital portion 211 of the processing device 164. One or more signals communicated between the DSP 154 and the digital portion 211 may be buffered. For example, voice signals may not be buffered while music and/or ringtone signals may be written to a first-in-first-out (FIFO) buffer by the DSP 154 and then fetched from the FIFO by the digital portion 211.

The control signal(s) 219 may configure operations of the digital portion 211 based, for example, on a resolution and/or sampling rate of signals being output by the DSP 154. In various embodiments of the invention, one or more control registers for the digital portion 211 may reside in the DSP 154. In various embodiments of the invention, the control signals 219 may comprise one or more interrupt signals.

The audio signal(s) 221 may each comprise, for example, voice data, music data, or ringtone data. Each audio signal 221 may be monaural signal, a left stereo channel, or a right audio channel. The digital portion 211 may condition and/or process the audio signals(s) 221 for conveyance to one or more audio output devices and/or uplink paths. In various embodiments of the invention, the resolution and/or sample rate of the audio signal(s) 221 may vary. Exemplary resolutions may comprise 16-bit and 18-bit resolution. Exemplary sample rates may comprise 8 kHz, 11.05 kHz, 12 kHz, 16 kHz, 22.05 kHz, 24 kHz, 32 kHz, 44.1 kHz, and 48kHz.

The signal strength indicator (SSI) signals 223 may comprise one or more feedback signals from the digital portion 211 to the DSP 154. The SSI signals 223 may provide an indication of signal strength of one or more frequency bands of one or more audio signals 221, 225, and/or 226. The SSI signals 223 may, for example, be utilized by the DSP 154, the processor 156, the memory 158, or a combination thereof to control a digital gain factor applied to each sub-band of one or more audio signals 221, 225, and/or 226.

The signal 227 may comprise audio data utilized to control a vibration transducer 178. The signal 227 may comprise, for example, CW tone data, voice data, music data, or ringtone data. Characteristics such as intensity of vibration, a pattern in which vibration is started and stopped, a frequency at which vibration is started and stopped, and duration of a vibration or sequence of vibrations may be controlled based on the signal 227.

The mixed audio signal(s) 225 and the mixed audio signals 226 may be output by the digital portion 211 to the DSP 154. The mixed audio signal(s) 225 may each be a composite signal comprising information from one or more monaural signals and/or stereo audio signals. Similarly, the mixed audio signal(s) 226 may each be a composite signal comprising information from one or more monaural signals and/or stereo audio signals. In this regard, one or more of the audio signals 221, one or more of the input audio signals 235, one or more of the input audio signals 241, and/or one or more of the audio signals 217 may be mixed together. Each of the audio signals 221, 235, 241, and 217 may be, for example, amplified, attenuated, band limited, up-converted, down-converted or otherwise processed and/or conditioned prior to mixing. The mixed audio signal(s) 225 may be part of and/or coupled to an uplink path. For example, the signal(s) 225 may be processed by the DSP 154 and transmitted, via the BT and/or USB subsystem 162, to a remote wireless system. Similarly, the mixed audio signal(s) 226 may be part of and/or coupled to an uplink path. For example, the signal(s) 226 may be processed by the DSP 154 and transmitted, via the transmitter 152, to a far-end communication partner or a remote wireless system.

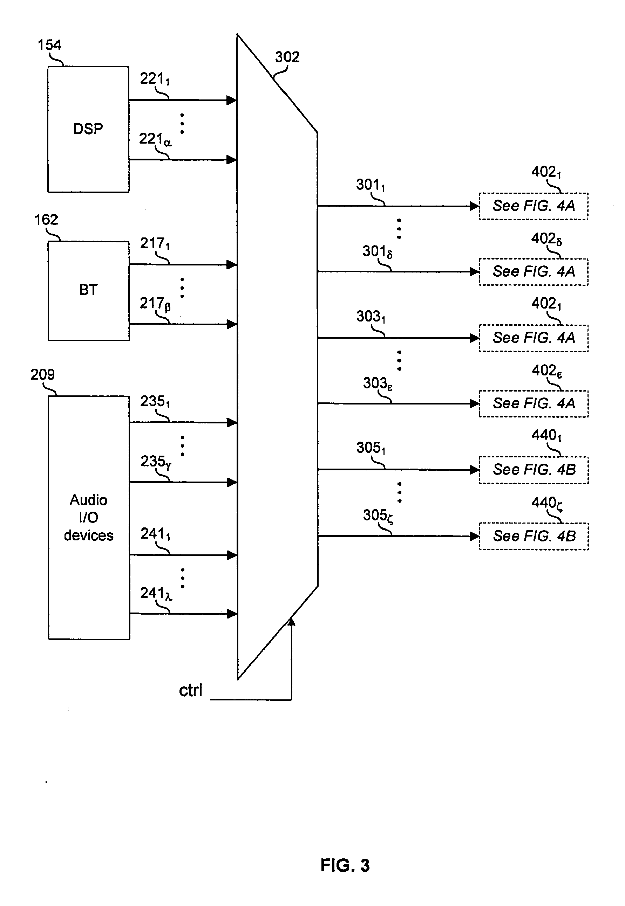

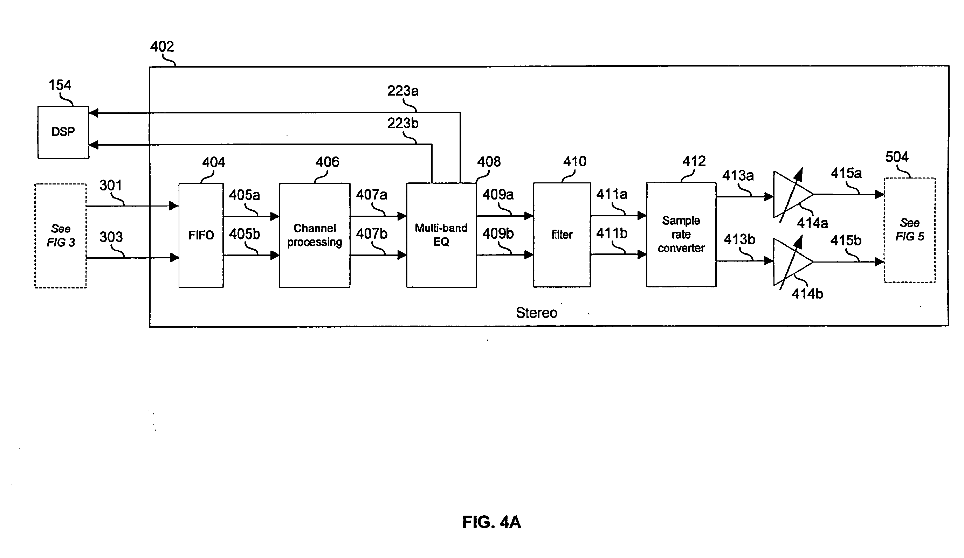

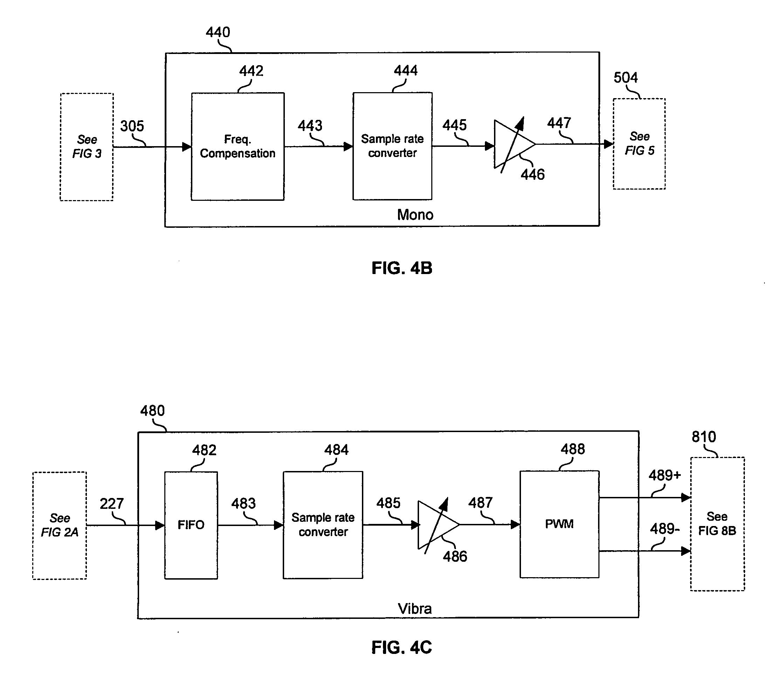

In operation, one or more baseband audio signals 217, 221, 235, and/or 241 may be conveyed to the audio processing device 164 from one or more of the DSP 154, the BT and/or USB subsystem 162, and the input and/or output devices 209. The digital portion 211 of the audio processing device 164 may select which baseband audio signal(s) 221 to process. Exemplary details of selecting audio signals for processing are described below with respect to FIG. 3. Each of the selected audio signals may be processed based on factors such as whether the signal may be one of a pair of stereo signals or is a monaural signal; whether the signal comprises voice, music, or ringtone data; a resolution of the signal; and a sample rate of the signal. Selected audio signals may be processed in an input processing path which may comprise conditioning audio signals based on source and/or characteristics of the audio signal, as described below with respect to FIGS. 4A and 4B. Subsequently, audio signals may be mapped from one or more input processing paths to one or more output processing paths, as described below with respect to FIG. 5. Then, audio signals may be processed in an output processing path which may comprise conditioning signals based on one or more output devices 209 and/or uplink paths to which the audio signals may be conveyed, as described below with respect to FIGS. 5, 6, 7A, 7B, 8A, and 8B.

FIG. 2B is a block diagram illustrating details of exemplary digital processing and analog processing portions of an audio processing device, in accordance with an embodiment of the invention. Referring to FIG. 2B, there is shown a digital portion 211 and an analog portion 213.

The digital portion 211 may comprise a switching element 302, a plurality of input audio processing blocks 402, a plurality of input audio processing blocks 440, a routing matrix 504, a plurality of mixers 506 and 510, a plurality of output audio processing blocks 602, a feedback audio processing block 720, a feedback audio processing block 740, and a digital vibration processing block 480. Details of the various components of the digital portion 211 are described below with respect to FIGS. 3, 4A, 4B, 4C, 5, 6, 7A, and 7B.

The analog portion 213 may comprise a plurality of analog audio processing blocks 802, and an analog vibration processing block 810. Details of the various components of the analog portion 213 are described below with respect to FIGS. 8A and 8B.

FIG. 3 is a block diagram illustrating selection of audio signals for processing by an audio processing device, in accordance with an embodiment of the invention. Referring to FIG. 3, there is shown a switching element 302 which may be operable to route one or more of the signals 221₁ ... 221_{α} (collectively referred to herein as signals 221), 217₁ ... 217_{β} (collectively referred to herein as signals 217), 235₁ ... 235_{γ} (collectively referred to herein as signals 235), and/or 241₁ ... 241_{λ} (collectively referred to herein as signals 241) from the DSP 154, BT and/or USB subsystem 162, and audio input devices 209 to the digital portion 211, where α, β, γ, and λ are integers greater than or equal to 1.

In operation, which of the signals 221, 217, 235, and/or 241 are routed to one or more input audio processing blocks 402 and/or 440 may be determined based on one or more control signals received from, for example, the DSP 154, the processor 156, and/or the BT and/or USB subsystem 162. In this regard, the switching element 302 may be configured dynamically and/or real-time so as to provide processing whenever it may be required. Selected signals 301₁ ... 301_{δ} may each be communicatively coupled to an input audio processing block 402 (FIG. 4), selected signals 303₁ ... 303_{ε} may each be communicatively coupled to an input audio processing block 402 (FIG. 4), and selected signals 305₁ ... 305_{ζ} may each be communicatively coupled to an input audio processing block 440 (FIG. 4), where δ, ε, and ζ are integers greater than or equal to 1. Each mono signal, left stereo channel, and right stereo channel may be selected independently. Accordingly, stereo audio signals may be selected and processed as a pair of stereo audio channels or may be selected as two separate mono channels. In an exemplary embodiment of the invention, the switching element 302 may comprise one or more multiplexers.

FIG. 4A is block diagram illustrating a high(er) bandwidth input audio processing block of an audio processing device, in accordance with an embodiment of the invention. Referring to FIG. 4A, there is shown an input audio processing block 402 comprising a FIFO 404, a channel processing block 406, a multi-band equalizer 408, a filter 410, a sample rate converter 412, and digital gain blocks 414a and 414b. In an exemplary embodiment of the invention, the digital portion 211 may comprise a number of input audio processing blocks 402 equal to the number of signals 301 or 303. In this regard, the number of input audio processing blocks 402 may be equal to the maximum of δ and ε, where δ is the number of signals 301 and ε is the number of signals 303. In instances, for example, that each input audio processing block 402 processes a pair of stereo signals, then δ and ε may be equal.

The FIFO 404 may comprise suitable logic, circuitry, and/or code that may be operable to buffer audio data. In this regard, the FIFO 404 may comprise one or more memory elements.

The channel processing block 406 may comprise suitable logic, circuitry, and/or code that may be operable to enable the input audio processing block 402 to handle stereo and monaural audio signals. In an exemplary embodiment of the invention, the channel processing block 406 may be configured such that signal 405a may be output as signal 407a and/or signal 407b, signal 405b may be output as signal 407a and/or 407b, and/or signals 405a and 405b may be mixed or combined and output as signal 407a and/or 407b. In various exemplary embodiments of the invention, the signal 407a may correspond to a left stereo channel and the signals 407b may correspond to a right stereo channel. The channel processing block 406 may be configured via one or more control signals from, for example, the processor 156, the DSP 154, and/or the memory 158. In this regard, the channel processing block 406 may be configured dynamically and/or in real-time so as to provide processing whenever it may be required.

The multi-band equalizer 408 may comprise suitable logic, circuitry, and/or code operable to independently adjust signal levels of signals 409a and 409b in each of one or more frequency bands and to generate SSI signals 223a and 223b, collectively referred to herein as signals 223, based on measured voltage, current, and/or power of the signals 409a and 409b, respectively. In this regard, the signal 223a may comprise an indication of strength of the signal 409a in one or more frequency bands. In an exemplary embodiment of the invention, the signal 223a may indicate signal strength of the signals 409a in each of five frequency bands. Similarly, the signal 223b may comprise an indication of strength of the signal 409b in one or more frequency bands. In an exemplary embodiment of the invention, the signal 223b may indicate signal strength of the signals 409b in each of five frequency bands. The multi-band equalizer 408 may be configured via one or more control signals from, for example, the processor 156, the DSP 154, and/or the memory 158. In this regard, the multi-band equalizer 408 may be configured dynamically and/or real-time so as to provide processing whenever it may be required.

The filter 410 may comprise suitable logic, circuitry, and/or code that may be operable to attenuate undesired frequencies to a greater extent than desired frequencies. The filter 410 may comprise, for example, a finite impulse response (FIR) filter and/or an infinite impulse response filter (IIR). In various embodiments of the invention, filter parameters may be configured based on the signals 301 and 303 being processed. For example, the filter 410 may be utilized as a de-emphasis filter for audio input from, for example a compact disc, or may be utilized as an anti-aliasing filter. The filter 410 may be configured via one or more control signals from, for example, the processor 156, the DSP 154, and/or the memory 158. In this regard, the filter 410 may be configured dynamically and/or real-time so as to provide processing whenever it may be required.

The sample rate converter 412 may comprise suitable logic, circuitry, and/or code that may be operable to convert a variety of audio signal sample rates to a single and/or common sample rate. In this regard, the sample rate converter may be enabled to up-sample and/or down-sample an audio signal. The sample rate converter 412 may be configured via one or more control signals from, for example, the processor 156, the DSP 154, and/or the memory 158. In this regard, the sample rate converter 412 may be configured dynamically and/or real-time so as to provide processing whenever it may be required.

The digital gain blocks 414a and 414b may each comprise suitable logic, circuitry, and/or code that may be operable to adjust an amplitude and/or intensity of digital audio signals 413a and 413b. In this regard, the signals 415a and 415b may be scaled versions of the signals 413a and 413b, respectively. The digital gain blocks 414a and 414b may be configured via one or more control signals from, for example, the processor 156, the DSP 154, and/or the memory 158. In this regard, the sample digital gain blocks 414a and 414b may be configured dynamically and/or in real-time so as to provide processing whenever it may be required.

The signals 301 and 303 may be high(er) bandwidth audio signals comprising, for example, music and/or ringtone data. The signals 301 and 303 may be, for example, a left stereo channel and a right stereo channel or two monaural signals.

In operation, the audio data of the signals 301 and 303 may be buffered by the FIFO 404. Subsequently, the buffered audio data may be conveyed to the channel processing block 406 which may determine which data to output as signal 407a and which data to output as signal 407b. For example, in instances that the signals 301 and 303 comprise stereo audio data, the channel processing block 406 may output left channel audio data as signal 407a and right channel audio data as signal 407b. For another example, in instances that the signals 301 and 303 are two monaural signals, the channel processing block 406 may output signal 301 as a left stereo channel and the signal 303 as a right stereo channel. For another example, in instances that signal 301 may be absent, the channel processing block 406 may output the signal 303 as both signals 407a and 407b. For another example, the channel processing block 406 may mix the signals 301 and 303 and output the same monaural signal, comprising data from both signals 301 and 303, as signals 407a and 407b.

Outputs of the channel processing block 406 may be conveyed to the multi-band equalizer 408. The multi-band equalizer may independently adjust signal levels of the signals 407a and 407b on each band to generate signals 409a and 409b. The level adjustments may be based on control commands from the DSP 154 or the processor 165. The multi-band equalizer 408 may measure strength of the signals 409a and 409b, in one or more frequency bands, and generate the SSI signals 223 based on the measurement(s). The signals 223 may be conveyed to the DSP 154 and may be utilized to, for example, protect against overdriving an audio output device. In this regard, audio signals may be compressed, expanded, filtered, or otherwise processed with reference to a subjective loudness curve. In this manner, an audio output device may be protected while still maintaining acceptable audio characteristics.

After being measured and conditioned by the multi-band equalizer 408, the audio signals 409a and 409b may be conveyed to the filter 410. The filter 410 may filter the signals 409a and 409b based on, for example, whether the audio signals comprise music or ringtone data, whether the signals may be stereo or monaural signals, and/or what input device or downlink path the signals may be from. The filter 410 may output signals 411 a and 411 b to the sample rate converter 412. The sample rate converter 412 may convert the signals 411 a and 411 b to a determined sample rate such that a plurality of audio signals conveyed to the routing matrix 504 (FIG. 5) may be of the same sample rate. In this manner, the digital portion 211 may be enabled to receive audio signals with a variety of sample rates. Utilizing a common sample rate for all signals conveyed to the routing matrix 504 may reduce cost and/or complexity of the routing matrix 504 and subsequent downstream components such as some of the components described below with respect to FIGS. 5, 6, 7A, 7B, 8a, and/or 8B.

The outputs 413a and 413b of the sample rate converter 412 may be conveyed to the digital gain blocks 414a and 414b, respectively. The gain blocks 414a and 414b may scale the audio signals 413a and 413b to output the signals 415a and 415b. In this regard, the gain blocks 414a and 414b may be operable to control an amplitude or volume of each of the audio signals 415a and 415b conveyed to the routing matrix 504.

FIG. 4B is block diagram illustrating a low(er) bandwidth input audio processing block of an audio processing device, in accordance with an embodiment of the invention. Referring to FIG. 4B, there is shown an input audio processing block 440 comprising a frequency compensation block 442, a sample rate converter 444, and a digital gain block 446. In an exemplary embodiment of the invention, the digital portion 211 (FIG. 2A) may comprise a number of input audio processing blocks 440 equal to the number of signals 305. In this regard, the number of input audio processing block 420 may be equal to ζ.

The frequency compensation block 442 may comprise suitable logic, circuitry, and/or code operable to condition the digital audio signal 305 based on the type, source, and/or other characteristics of the audio signals 305. The frequency compensation block 442 may be operable to filter the audio signal 305 based on the input device which generated the audio signal 305. For example, different audio input devices 209 may have different non-linearities and the frequency compensation block 442 may attempt to correct or adjust for the non-linearities so as to more accurately reproduce the audio data. The frequency compensation block 442 may be configured via one or more control signals from, for example, the processor 156, the DSP 154, and/or the memory 158. In this regard, the frequency compensation block 442 may be configured dynamically and/or real-time so as to provide processing whenever it may be required.

The sample rate converter 444 may be similar to or the same as the sample rate converter 412 described with respect to FIG. 4A.

The digital gain block 446 may be similar to or the same as the digital gain block 414a and/or 414b described with respect to FIG. 4A.

The signal 305 may be a low(er) bandwidth audio signal comprising, for example, monaural voice data.

In operation, the signal 305 may be conveyed from the switching element 302 (FIG. 3) to the frequency compensation block 442. The frequency compensation block 442 may process the signal 305 based on the input device 209 and/or downlink path from which the audio data of the signal 305 originated. The frequency compensated signal 443 may then be conveyed to the sample rate converter 444, which may convert the signal 443 to a determined sample rate such that a plurality of audio signals conveyed to the routing matrix 504 (FIG. 5) may be of the same sample rate. Utilizing a common sample rate for a plurality of signals conveyed to the routing matrix 504 may reduce cost and/or complexity of the routing matrix 504 and subsequent downstream components such as some of the components described below with respect to FIGS. 5, 6, 7A, 7B, 8a, and/or 8B.

The output 445 of the sample rate converter 444 may be conveyed to the digital gain block 446. The gain block 446 may scale the audio signal 445 to output the signal 447. In this regard, the gain block 446 may be operable to control an amplitude or volume of the audio signal 447 conveyed to the routing matrix 504.

FIG. 4C is block diagram illustrating a digital vibration processing block of an audio processing device, in accordance with an embodiment of the invention. Referring to FIG. 4C, there is shown a digital vibration processing block 480 comprising a FIFO 482, a sample rater converter 484, a digital gain block 486, and a pulse width modulator (PWM) 488.

The FIFO 482 may be similar to or the same as the FIFO 404 described with respect to FIG. 4A.

The sample rate converter 484 may be similar to or the same as the sample rater converter 412 described with respect to FIG. 4A.

The digital gain block 486 may be similar to or the same as the digital gain block 414a and/or 414b described above with respect to FIG. 4A.

The PWM 488 may comprise suitable logic, circuitry, and/or code operable to generate a periodic differential signal 489 wherein a period or frequency of the signal 489 is based on the audio signal 487. The PWM 488 may be configured via one or more control signals from, for example, the processor 156, the DSP 154, and/or the memory 158. In this regard, the PWM 488 may be configured dynamically and/or real-time. In various exemplary embodiments of the invention, spectral shaping may be applied to reduce noise in the audible band, similar to what may be done in a delta-sigma modulator.

The signal 227 may be a monaural audio signal.

In operation, the audio signal 227 may be buffered in the FIFO 482. Subsequently, audio data from the FIFO 482 may be conveyed to the sample rate converter 484 which may convert the signal 483 to a sample rate suitable for driving the vibration transducer 178. The output 485 of the sample rate converter 484 may be conveyed to the digital gain block 486. The gain block 486 may scale the audio signal 485 to output the signal 487-. In this regard, the gain block 486 may be operable to control an amplitude or volume of the audio signal 487 conveyed to the PWM 488. The PWM 488 may adjust the duty cycle of the periodic signal 489 based on the amplitude of the audio signal 487. The duration and/or intensity of vibrations of the vibration transducer 178 may correspond to the duration and/or amplitude of the signal 489.

FIG. 5 is a block diagram illustrating routing of audio signals from an input processing path of an audio processing device to an output processing path, in accordance with an embodiment of the invention. Referring to FIG. 5, there is shown a routing matrix 504; mixers 506₁ ... 506_{θ+2}, collectively referred to herein as mixers 506, and mixers 510₁ ... 510_{θ+2}, collectively referred to herein as mixers 510, where θ is an integer greater than or equal to 1..

The routing matrix 504 may comprise suitable logic, circuitry, and/or code operable to route each of the signals 415a₁ ... 415a_{δ}, 415b₁ ... 415b_{ε}, and 447₁ ... 447_{ζ} to one or more of the mixers 506 and/or 510. The routing matrix 504 may be configured via one or more control signals from, for example, the processor 156, the DSP 154, and/or the memory 158. Moreover, configuration of the routing matrix 504 may occur dynamically and/or in real-time. In various embodiments of the invention, the routing matrix 504 may comprise one or more multiplexers or similar switching elements.

The mixers 506 and 510 may each comprise suitable logic, circuitry, and/or code operable to combine audio signals into a composite audio signal. Each mixer 506 may combine up to η audio signals to generate a composite audio signal 517. Similarly each mixer 510 may combine up to η audio signals to generate a composite audio signal 519. In various embodiments of the invention, each signal 517₁ ... 517_{θ+2}, may be a left stereo channel and each signal 519₁ ... 519_{θ+2}, may be a right stereo channel. In an exemplary embodiment of the invention, the mixers 506 and 510 may output up to θ+2 stereo signals or up to 2(θ+2) monaural signals to a number, θ, of analog audio processing blocks 802, a feedback audio processing block 720, and a feedback audio processing block 740. The mixers 506 and 510 may be configured via one or more control signals from, for example, the processor 156, the DSP 154, and/or the memory 158. In this regard, the mixers 506 and 510 may be configured dynamically and/or real-time so as to provide processing whenever it may be required.

In operation, each of the input signals 415a₁ ... 415a_{δ} and 415b₁ ... 415b_{ε}, collectively referred to herein as signals 415, and 447₁ ... 447_{ζ}, collectively referred to herein as signals 447, may be communicatively coupled, via the routing matrix 504, to one or more of the mixers 506 and/or 510. Routing of each input signal 415 and/or 447 may depend, at least in part, on an output device 209 and/or uplink path for which each signal 415 and 447 may be destined. In this regard, the routing and re-routing of signals between inputs and outputs of the audio processing device 164 may occur real-time. Routing of each input signal 415 and/or 447 may be independent of the routing of other input signals 415 and 447, independent of the source of each signal 415 and/or 447, and independent of whether each signal 415 and/or 447 is a stereo channel or a monaural channel. Thus, upstream from the routing matrix 504 audio signals may be processed according to an input of the processing device 164 on which the audio signals where received and downstream from the routing matrix 504 audio signals may be processed based on an output of the processing device 164 for which the signals are destined. In this manner, the processing device 164 may provide flexibility in routing audio signals of various types from various sources to one or more audio output devices and/or uplink paths. Upstream from the routing matrix 504 may comprise the input audio processing blocks 402 and 440. Downstream from the routing matrix 504 may comprise the mixers 506 and 510, the output audio processing blocks 602, the feedback audio processing block 720, and the feedback audio processing block 740.

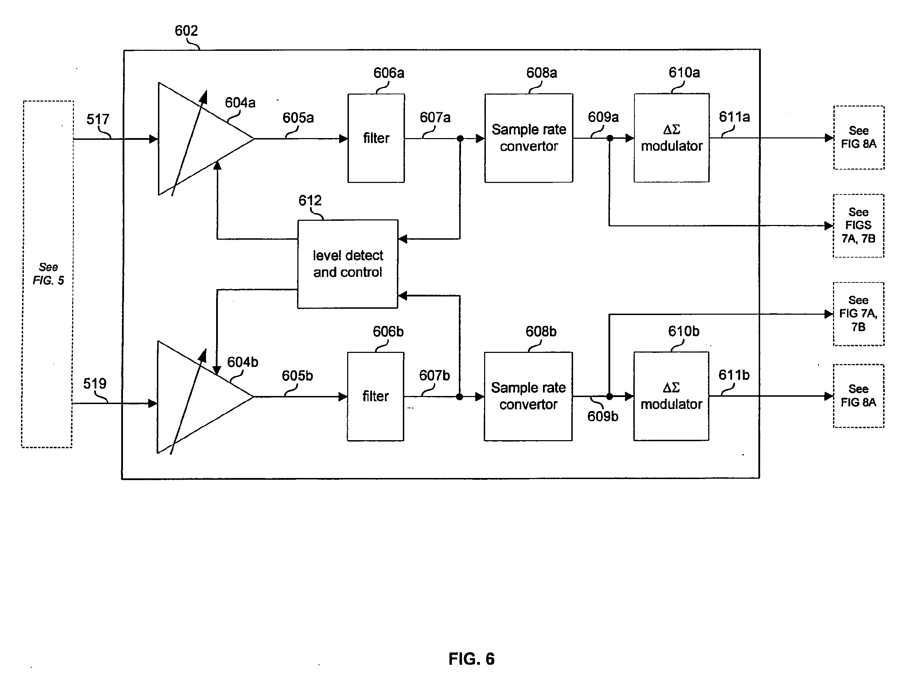

FIG. 6 is a block diagram illustrating processing of audio signals for conveyance to an audio output device and/or a feedback audio processing block, in accordance with an embodiment of the invention. Referring to FIG. 6, the output audio processing block 602 may comprise digital gain blocks 604a and 604b, filters 606a and 606b, sample rate converters 608a and 608b, ΔΣ modulators 610a and 610b, and level control block 612. In an exemplary embodiment of the invention, the digital portion 211 may comprise a number of output audio processing blocks 602 equal to the number of the signals 517 and 519. In this regard, the number of output audio processing blocks 602 may be equal to θ + 2.

The digital gain blocks 604a and 604b may be similar to or the same as the digital gain blocks 414a and/or 414b described above with respect to FIG. 4A.

The filters 606a and 606b may each comprise suitable logic, circuitry, and/or code operable to attenuate undesired frequencies to a greater extent than desired frequencies and/or to compensate for the non-ideal frequency responses of an output device 209 the mixed signals 605a and 605b are destined to. The filters 606a and 606b may each comprise, for example, a finite impulse response (FIR) filter and/or an infinite impulse response filter (IIR). The filters 606a and 606b may be configured via one or more control signals from, for example, the processor 156, the DSP 154, and/or the memory 158. In this regard, the filters 606a and 606b may be configured dynamically and/or real-time so as to provide processing whenever it may be required.

The sample rate converters 608a and 608b may each be similar to or the same as the sample rater converter 412 described with respect to FIG. 4A. The outputs 609a and 609b may be output to ΔΣ modulators 610a and 610b, respectively, and/or to one or more of the feedback audio processing block 720 and the feedback audio processing block 740.

The ΔΣ modulators 610a and 610b may comprise suitable logic, circuitry, and/or code operable to oversample the signals 611 a and 611 b, respectively, in order to improve noise characteristics of audio signals conveyed to the analog audio processing block 802. The ΔΣ modulators 610a and 610b may be configured via one or more control signals from, for example, the processor 156, the DSP 154, and/or the memory 158. In this regard, the ΔΣ modulators 610a and 610b may be configured dynamically and/or real-time so as to provide processing whenever it may be required.

The level control block 612 may comprise suitable logic, circuitry, and/or code operable to adjust a gain of the gain blocks 604a and 604b based on signal strength of the signals 607a and 607b, respectively. The level control block 612 may be configured via one or more control signals from, for example, the processor 156, the DSP 154, and/or the memory 158. In this regard, the level control block 612 may be configured dynamically and/or real-time. The level control block 612 may work in combination with the signals 223 described with respect to FIG. 2A for maintaining output signals level to protect against overdriving an output device. In this regard, the signals 223 may provide a slower, sub-band based level control while the level control block 612 may provide a rapid, full-band level control.

The audio output processing block 602 may process and/or condition audio signals based on an output of the processing device 164 to which the signals may be conveyed. In this regard, one or more of the digital gain blocks 604a and 604b, the filters 606a and 606b, the sample rate converters 608a and 608b, the ΔΣ modulators 610a and 610b, and the level control block 612 may be configured based on whether the signals 609a and 609b or 611a and 611b may be communicatively coupled to the feedback audio processing block 720, the feedback audio processing block 740, or to an output device 209 via an analog output processing block 802.

In operation, the level control block 612 may be operable to adjust the digital gain blocks 604a and 604b based on signal strength of the signals 607a and 607b. In this manner, in instances that the signals 607a and 607b are below a threshold, the gain of the digital gain blocks 604a and 604b may be maintained. Conversely, in instances that the signals 607a and/or 607b are above a threshold, the gain of the digital gain blocks 604a and/or 604b may be reduced. In this manner, signals conveyed to an output device and/or a feedback audio processing block may be maintained within determined levels so as to, for example, prevent overdriving an output device. The outputs 607a and 607b of the digital gain blocks may subsequently be up-sampled and ΔΣ modulated before being conveyed to an output device 209 via an analog output processing block 802. Alternatively and/or additionally, the outputs 607a and 607b may be down-sampled by the sample rate converters 608a and 608b before being conveyed to one or more of the feedback audio processing block 720 and the feedback audio processing block 740.

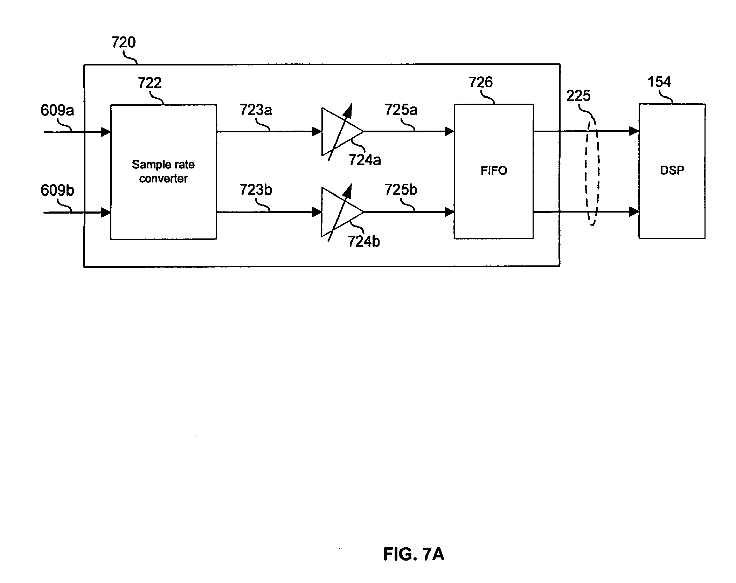

FIG. 7A is block diagram illustrating a high(er) bandwidth feedback audio processing block of an audio processing device, in accordance with an embodiment of the invention. Referring to FIG. 7A there is shown a feedback audio processing block 720 comprising a sample rate converter 722, digital gain blocks 724a and 724b, and a FIFO 726. In various embodiments of the invention, the feedback audio processing block 720 may be part of and/or communicatively coupled to an uplink path comprising portions of the DSP 154 and/or the BT and/or USB subsystem 162. In various embodiments of the invention, the feedback audio processing block 720 may be communicatively coupled to a downlink path such as a headset via the BT and/or USB subsystem 162.

The sample rate converter 722 may be similar to or the same as the sample rate converter 412 described with respect to FIG. 4A.

The digital gain blocks 724a and 724b may be similar to or the same as the digital gain blocks 414a and/or 414b described above with respect to FIG. 4A.

The FIFO 726 may be similar to or the same as the FIF0 404 described with respect to FIG. 4A.

In operation, feedback audio processing block 720 may condition signals for conveyance to the DSP 154 and/or BT and/or USB subsystem 162. In this regard, the audio signal 225 may comprise voice, music, and/or ringtone data which may be communicated to a remote device utilizing BT and/or USB protocols.

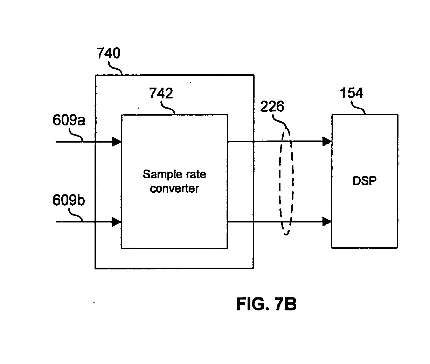

FIG. 7B is block diagram illustrating a low(er) bandwidth feedback audio processing block of an audio processing device, in accordance with an embodiment of the invention. Referring to FIG. 7B there is shown a feedback audio processing block 740 comprising a sample rate converter 742. The feedback audio processing block 740 may be part of and/or communicatively coupled to an uplink path comprising portions of the DSP 154 and/or the transmitter 152.

The sample rate converter 742 may be similar to or the same as the sample rate converter 412 described with respect to FIG. 4A.

In operation, feedback audio processing block 740 may condition signals for conveyance to the DSP 154 and/or the transmitter 152. In this regard, the audio signal 226 may comprise voice, music, and/or ringtone data which may be communicated to a remote wireless device utilizing, for example, cellular, WLAN, and/or PAN protocols.

FIG. 8A is a block diagram illustrating an analog audio processing block of an audio processing device, in accordance with an embodiment of the invention. Referring to FIG. 8A there is shown digital-to-analog converters (DAC) 804a and 804b and amplifiers 806a₁ ... 806a_{κ} and 806b₁ ... 806b_{κ}, collectively referred to herein as amplifiers 806.

The DACs 804a and 804b may comprise suitable logic, circuitry, and/or code operable to convert the digital audio signals 611 a and 611 b, respectively, into analog representations suitable for driving an analog output device 209.

Each of the amplifiers 806 may comprise suitable logic, circuitry, and/or code operable to buffer and/or amplify analog audio signals to drive an audio output device 209. A gain of each of the amplifiers 806 may be controlled via one or more control signals from, for example, the processor 156, the DSP 154, and/or the memory 158. In this regard, the amplifiers 806 may be configured dynamically and/or real-time so as to provide processing whenever it may be required.

In operation, signals 611a and 611b may be converted to analog representations 805a and 805b by DACs 804a and 804b, respectively. The analog signal 805a may be amplified by one or more of amplifiers 806a₁ ... 806a_{κ} to generate signals 237a₁ ... 237a_{κ}, where κ is an integer greater than 1. The analog signal 805b may be amplified by one or more of amplifiers 806b₁ ... 806b_{κ} to generate signals 237b₁ ... 237b_{κ}, where κ is an integer greater than 1. In this regard, the signals 237a₁ ... 237a_{κ} may each be monaural or left channel audio data conveyed to an audio output device 209. Similarly, the signals 237b₁ ... 237b_{κ} may each be monaural or right channel audio data conveyed to an audio output device 209

FIG. 8B is a block diagram illustrating an analog vibration processing block of an audio processing device, in accordance with an embodiment of the invention. Referring to FIG. 8B the analog vibration processing block 810 may comprise an amplifier 820.

The amplifier 820 may comprise suitable logic, circuitry, and/or code operable to amplify and/or buffer the signal. In this regard, the signal 489 may be buffered or amplified to generate the signal 239 output to the vibration transducer 178.

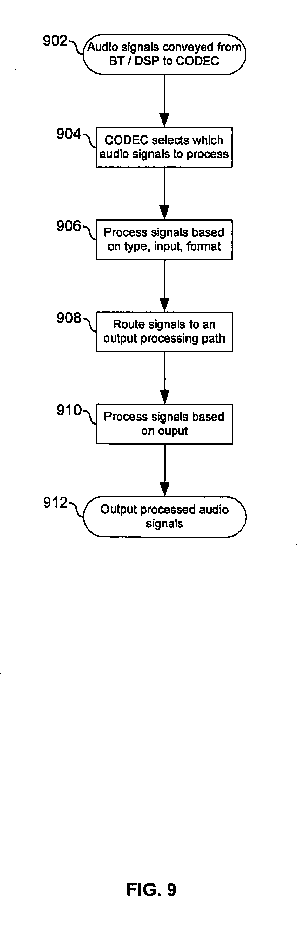

FIG. 9 is a flowchart illustrating exemplary steps for processing of signals by a hardware audio CODEC, in accordance with an embodiment of the invention. Referring to FIG. 9, the exemplary steps may begin with step 902 when baseband audio signals may be received at the audio processing device 164. For example, one or more audio signals 217, 221, 235, and/or 241 may be input to the audio processing device 164. Subsequent to step 902, the exemplary steps may advance to step 904. In step 904, the switching element 302 may select one or more of the input audio signals for processing. Subsequent to step 904, the exemplary steps may advance to step 906. In step 906, the audio processing device 164 may process the audio signals based on factors such as the input via which the signals were received, the content of the audio signal, and/or whether the audio signals are stereo or mono. Subsequent to step 906, the exemplary steps may advance to step 908. In step 908, the audio signals processed in step 906 may each be routed one or more output processing paths by one or more switching elements such as the routing matrix 504. Subsequent to step 908, the exemplary steps may advance to step 910. In step 910, the audio signals may be processed based on an output to which they may be routed. For example, the signals may be routed based on an audio output device and/or uplink processing path to which they may be conveyed. Subsequent to step 910, the exemplary steps may advance to step 912. In step 912, the processed audio signal(s) may be presented to a listener via an output audio device and/or may be output to an uplink signal path.

Exemplary aspects of a method and system for processing audio signals via separate input and output processing paths are provided. In this regard, a hardware audio CODEC 164 comprising one or more audio inputs and one or more audio outputs and may be enabled to route, via one or more switching elements 504, audio signals from any of the inputs to any of the outputs. Exemplary inputs of the CODEC 164 may be communicatively coupled to the BT and/or USB subsystem 162 and the DSP 154. Exemplary outputs of the CODEC 164 may be communicatively coupled to output audio devices 209 and/or uplink communication paths via the DSP 154 and/or the BT and/or USB subsystem 162. The CODEC may be enabled to simultaneously process a plurality of audio signals based on a configuration of the switching elements 504. The switching elements 504 may be dynamically configured. Upstream from the switching elements 504, received audio signals may be processed independent of an output to which the may be communicated. Downstream from said switching elements 504 audio signals may be processed independent of an input via which the signals were received. Audio signals may be processed based on whether said audio signals comprise stereo or monaural audio data; whether said audio signals comprise voice, music, or ringtone data; a source of said audio signals; one or more output devices to which said audio signals are to be output; and one or more uplink paths via which said audio signals are to be transmitted to a remote wireless device. Exemplary audio signal sources may comprise an analog microphone 168, a digital microphone 176, and a receiver enabled to receive signals adhering to one or more wireless protocols. Exemplary output devices may comprise one or more speaker(s) 170, headphone(s) or earphone(s) 166, and hearing aid compatibility device(s) 174.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for processing audio signals via separate input and output processing paths.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. One embodiment utilizes a commercially available processor, which may be implemented external to an ASIC implementation of the present system. Alternatively, in an embodiment where the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for signal processing, the method comprising:
in a hardware audio CODEC comprising a plurality of inputs and a plurality of outputs, switching, via one or more switching elements, any of said plurality of inputs to any of said plurality of outputs to enable said hardware audio CODEC to process any of a plurality of received audio signals received via said plurality of inputs.

2. The method according to claim 1, comprising simultaneously processing by said hardware audio CODEC, two or more of said plurality of received audio signals based on said switching.

3. The method according to claim 1, comprising dynamically switching any of said plurality of inputs to any of said plurality of outputs.

4. The method according to claim 1, comprising, upstream from said one or more switching elements, conditioning said any of a plurality of received audio signals independent of an output to which a corresponding processed output audio signal is it to be communicated.

5. The method according to claim 1, comprising, downstream from said one or more switching elements, conditioning an audio signal independent of an input via which a corresponding one of said any of a plurality of received audio signals was received.

6. The method according to claim 1, comprising processing said any of a plurality of received audio signals in said hardware audio CODEC based on whether said audio signals comprise stereo or monaural audio data.

7. The method according to claim 1, comprising processing said any of a plurality of received audio signals in said hardware audio CODEC based on whether said audio signals comprise voice, music, or ringtone data.

8. A system for signal processing, the system comprising:
one or more circuits comprising a hardware audio CODEC with a plurality of inputs, a plurality of outputs, and one or more switching elements, said one or more circuits being operable to switch any of said plurality of inputs to any of said plurality of outputs to enable said hardware audio CODEC to process any of a plurality of received audio signals received via said plurality of inputs.

9. The system according to claim 8, wherein said one or more circuits are operable to simultaneously process two or more of said plurality of received audio signals based on said switching.

10. The system according to claim 8, wherein said one or more circuits are operable to dynamically switch any of said plurality of inputs to any of said plurality of outputs.
